# EUROPÄISCHE PATENTSCHRIFT

(11) **EP 3 915 383 B1**
(45) Veröffentlichungstag und Bekanntmachung des Hinweises auf die Patenterteilung: **01.11.2023**
(21) Anmeldenummer: 21175634.1
(22) Anmeldetag: 25.05.2021
(51) Int. Cl.: A22C 7/00, A22C 9/00

(54) **SCHNITZEL-PLÄTTER**
SCHNITZEL FLATTENING MACHINE
MACHINE À APLATIR LES ESCALOPES

(30) Priorität: 26.05.2020 DE 102020114060
(43) Veröffentlichungstag der Anmeldung: 01.12.2021
(73) Patentinhaber: Völkl, Franz Xaver, 83052 Bruckmühl (DE)
(72) Erfinder: Völkl, Franz Xaver, 83052 Bruckmühl (DE)
(74) Vertreter: Weickmann & Weickmann PartmbB

(56) Entgegenhaltungen:
- FR-A1- 2 358 107
- FR-A1- 2 711 483
- GB-A- 811 618

## Beschreibung

### I. Anwendungsgebiet

Die Erfindung betrifft das Verformen von dicken Scheiben zu dünnen Scheiben aus einem Material, welches primär plastisch, aber auch etwas elastisch ist, beispielsweise wie rohes Fleisch. Dieser Vorgang ist beispielsweise für die Vorbehandlung von rohen Schnitzeln vor deren Anbraten notwendig. An diesem Beispiel ist die Erfindung nachfolgend beschrieben, ohne die Erfindung hierauf zu beschränken.

### II. Technischer Hintergrund

Im Haushalt und auch in kleinen Gaststätten werden die rohen Schnitzel vor dem Anbraten von Hand mit einem so genannten Schnitzelplätter, einem hammerartigen Handwerkzeug, auf dessen Schlagfläche sich eine Vielzahl von Erhebungen wie Noppen befinden, dünner geklopft, was Zeit benötigt, da die Schlagfläche deutlich kleiner als die Fläche des Schnitzels ist, die den gesamten Zubereitungsprozess verzögert und was zusätzlich Lärm verursacht.

Darüber hinaus ist handwerkliches Geschick erforderlich, um die Positionen der einzelnen Schläge und ihre Kraft so zu wählen, dass das rohe Schnitzel stufenweise immer dünner wird bis auf solch dicke, die meist nur die Hälfte oder 1/3 der Ausgangsdicke beträgt, da das Schnitzel dabei auch in der Lage sein muss, sich in seiner Fläche zu vergrößern, ohne dass das Fleisch dabei Risse bekommt.

Um die manuelle Arbeit zu reduzieren, sind bereits Plätt-Vorrichtungen bekannt, bei denen beispielsweise das Schnitzel durch ein Walzenpaar gezogen wird, auch in mehreren Schritten hintereinander, wobei der lichte Abstand zwischen den Walzen dabei stufenweise verringert werden kann.

In den Oberflächen zumindest einer der Walzen sind dann meist ebenfalls Erhebungen wie Noppen eingearbeitet.

Ferner sind hierfür Stempelpressen bekannt, deren Stempelfläche größer ist als das Schnitzel, so dass das Schnitzel unter den Stempel gelegt wird, und dieser in mehreren Schlägen das Schnitzel auf Soll-Dicke bringt.

Zum einen haben diese bisher bekannten Vorrichtungen nicht zum gleichen Ergebnis wie von Hand geplättete Schnitzel geführt, zum anderen sind die Vorrichtungen teilweise groß, teuer und aufwändig zu reinigen.

Ferner ist aus der GB 811 618 A eine Weichmacher-Maschine bekannt, bei der auf ein Fleischstück nebeneinander eine Vielzahl von Kontaktelementen aufgelegt werden, mittels der hochfrequente Vibrationen in das Fleischstück eingebracht werden, um es von der Struktur her weicher zu machen.

Ein Dünnerklopfen findet dort nicht statt.

Aus FR2711483A1 und FR2358107A1 sind Maschinen zum behandeln von Schinken bekannt.

### III. Darstellung der Erfindung

### a) Technische Aufgabe

Es ist daher die Aufgabe gemäß der Erfindung, eine Vorrichtung sowie ein Verfahren zum Dünnerklopfen von primär plastischen Scheiben wie etwa Schnitzeln zur Verfügung zu stellen, die kompakt, einfach aufgebaut und leicht zu reinigen ist, und die damit behandelten rohen Schnitzel dem Ergebnis eines von Hand geplätteten Schnitzels möglichst nahe kommen.

### b) Lösung der Aufgabe

Diese Aufgabe wird durch die Merkmale der Ansprüche 1 und 16 gelöst.

Vorteilhafte Ausführungsformen ergeben sich aus den Unteransprüchen.

Hinsichtlich der Vorgehensweise wird sie dadurch gelöst, dass mehrere in Durchlaufrichtung zueinander benachbarte Bereiche der Scheibe jeweils mehrfach nacheinander quer zu ihrer Hauptebene dünner geklopft werden mittels Stempeln.

Die Bereiche erstrecken sich dabei vorzugsweise quer zur Vorschubrichtung über die gesamte Breite der Scheibe.

Die zueinander benachbarten Bereiche schließen vorzugsweise unmittelbar, also lückenlos, aneinander an, oder besitzen höchstens einen Abstand zueinander, der maximal der Hälfte, besser maximal 1/3, besser maximal 1/4 der End-Dicke der Scheibe entsprechen, auf die sie gebracht werden soll durch das Dünnerklopfen.

Dadurch werden nicht bearbeitete Bereiche vermieden.

Während eines Klopfdurchgangs - der das einmalige Herabbewegen und wieder Anheben aller Stempel hintereinander umfasst - steht die Scheibe in Durchlaufrichtung vorzugsweise still, sodass bei jedem Klopfdurchgang der gesamte, sich unter den Stempeln befindende, Teil der Scheibe geklopft wird.

Durch den zeitlichen Versatz kann Material aus demjenigen Bereich, der momentan von einem Stempel zusammengedrückt wird, sich auch in und entgegen der Durchlaufrichtung fließen, was die Struktur der Scheibe schont.

Dies wird erreicht, indem die in Durchlaufrichtung hintereinander angeordneten Stempel in ihrer tiefsten Position in Durchlaufrichtung einen abnehmenden, jedoch jeweils definierten, Restabstand in Form des horizontalen Schlitzes zur Hindurchführung der Scheibe aufweisen zwischen der Auflagefläche für die Scheibe und der unteren Kontaktfläche des Stempels.

Dabei wird jeder der Bereiche mehrfach hintereinander auch mit einem Stempel geklopft, dessen Restabstand dem Endabstand entspricht, also dem kleinsten der Restabstände der Stempel.

Der Restabstand entspricht jedoch nicht der späteren Dicke der behandelten Scheibe, denn da deren Material sich teilweise elastisch verhält, wird die Dicke nach der Behandlung etwas größer sein als der Restabstand.

Vorzugsweise kommen die Stempel in einem Klopfdurchgang zeitlich zueinander versetzt zum Einsatz, vorzugsweise beginnend mit dem Stempel mit dem größten Restabstand. und von einem zum nächsten benachbarten Stempel folgend bis zu dem Stempel mit dem geringsten Restabstand.

Falls es Stempel mit dem gleichen Restabstand gibt, wird mit dem in Durchlaufrichtung stromaufwärtigen Stempel mit dem gleichen Restabstand begonnen.

Die Scheibe wird also zwischen den Klopfdurchgängen schrittweise in Durchlaufrichtung vorwärts bewegt, wobei die Schrittweite des Scheiben-Transports der Breite eines Stempels in Durchlaufrichtung entspricht oder etwas geringer ist.

Der zeitliche Abstand zwischen den einzelnen Klopfdurchgängen, der zum Weitertransport der Scheibe um einen Schritt zur Verfügung steht, ist vorzugsweise größer als die für einen Klopfdurchgang benötigte Zeit, besser mindestens doppelt so groß ist, besser mindestens dreimal so groß.

Vorzugsweise besitzen alle Stempel in Durchlaufrichtung eine gleiche Länge.

Wenn es jedoch unterschiedliche Längen sind, ist die größte Länge um maximal 10 %, besser maximal 5 %, besser maximal 3 % grösser als die kleinste. Unter Stempellänge wird dann die durchschnittliche Stempellänge verstanden.

Das Dünnerklopfen einander anschließender Bereiche kann jedoch auch zeitlich überlappend durchgeführt werden, was insbesondere davon abhängt, ob die Stempel an ihren tiefsten Punkt jeweils eine nennenswerte Verweilzeit besitzen, was ja primär von der Form der Nocken abhängt:
Dann ist es möglich, dass der in Durchlaufrichtung nächste Stempel seine tiefste Position erreicht, während der in Durchlaufrichtung vorangehende Stempel seine tiefste Position noch nicht wieder verlassen hat oder nur soweit verlassen hat, dass er die Scheibe darunter noch immer zusammendrückt.

Dann jedoch kann sich der Teilbereich der Scheibe unter dem nächsten Stempel, wenn dieser seine tiefste Position erreicht, primär nur in Durchlaufrichtung aus dem Spalt zwischen Stempel und Auflagefläche heraus verformen.

Der gewünschte Endabstand wird vorzugsweise eingestellt, indem die Höhe, also der Abstand, der Auflagefläche für die Scheiben relativ zu den darüber befindlichen Stempeln eingestellt wird, sodass die Scheiben auf unterschiedliche gewünschte Endabstände dünner geklopft werden können.

Da sich die Stempel in der Regel über die gesamte Breite des Schlitzes quer zur Durchlaufrichtung, also im Betrieb quer über die Scheibe hinweg, erstrecken, ist in dieser Richtung kaum oder kein Fließen von Material möglich. Um diesen Nachteil gering zu halten, sollten die Scheiben mit der Richtung ihrer größten Erstreckung entlang ihrer Scheiben-Ebene, der Hauptebene der Scheibe, in Durchlaufrichtung auf die Auflagefläche gelegt werden.

Ein 360°-Umlauf der Nockenwelle benötigt im Betrieb in der Regel 0,7 Sekunden bis 1 Sekunde. Der größte und der kleinste Radius eines Nockens differieren meist um ca. 10 mm bis 20 mm. Insbesondere beträgt dann die maximale Geschwindigkeit der Stempel, die im Bereich zwischen ihrem oberen und ihrem unteren Umkehrpunkt erreicht wird, zwischen 0,01 und 0,02 m/sec.

Um bei einem Stück strukturierten, inhomogenen Material wie etwa rohem Fleisch die Bindungen zwischen einzelnen Fleischfasern zumindest zu lockern, also eine vollständige elastische Rückverformung zu verhindern, kommt es jedoch primär auf die prozentuale Dicken-Abnahme und/oder den Druck an, der auf die Scheibe ausgeübt wird.

Hinsichtlich des Schnitzel-Plätters, also der Plätt-Vorrichtung, wird diese Aufgabe dadurch gelöst, dass die Plätt-Vorrichtung zunächst ein Grundgestell besitzt, in dem ein Scheibenförderer mit einer Auflagefläche für die Scheiben montiert ist, die in Durchlaufrichtung durch die Vorrichtung bewegbar ist, sowie oberhalb der Auflagefläche mindestens ein, besser mehrere, auf und ab bewegliche Plätt-Elemente vorhanden sind.

Vorzugsweise ist der Scheibenförderer ein endlos umlaufendes Förderband, bei dem die Oberseite des horizontal laufenden Obertrums als Auflagefläche für die Scheiben dient.

Erfindungsgemäß sind als Plättelemente in Durchlaufrichtung hintereinander angeordnete Stempel vorhanden, die motorisch oder manuell von einem Stempel-Antrieb oder mehreren Stempel-Antrieben aufwärts und abwärts angetrieben sind und beim abwärts Bewegen auf die Scheibe schlagen.

Ebenso besitzt auch der Scheibenförderer einen manuellen oder motorischen Antrieb, der vorzugsweise mit dem Stempel-Antrieb gekoppelt ist und auf dessen Bewegungen abgestimmt ist.

Vorzugsweise besteht die Abstimmung darin, in welcher Reihenfolge und mit welchem zeitlichen Versatz die einzelnen Stempel zum Einsatz kommen und/oder wann in der zeitlichen Lücke zwischen zwei Klopfdurchgängen die Scheibe um einen Schritt mittels des Scheibenförderers vorwärts bewegt wird.

Vorzugsweise umfasst die Vorrichtung nur einen einzigen, entweder manuellen, jedoch bevorzugt motorischen, Antrieb, also einen Antriebsmotor, der sowohl alle Stempel antreibt als auch den Scheibenförderer, die zu diesem Zweck mechanisch miteinander verbunden sind, insbesondere über Zahnräder und/oder Zahnriemen bzw. Ketten.

Wie bereits erläutert, sind die Stempel in Durchlaufrichtung vorzugsweise unmittelbar zueinander benachbart, also lückenlos hintereinander angeordnet oder besitzen einen nur geringen Abstand zueinander wie oben angegeben.

Die Breite in Durchlaufrichtung der nach unten gerichteten unteren Kontaktfläche der Stempel in Durchlaufrichtung beträgt dabei maximal 40 mm, besser maximal 30, besser maximal 25 mm, besser maximal 20 mm, um ein Fließen des Materials der Scheibe beim Aufschlagen des Stempels in und/oder entgegen der Durchlaufrichtung zu ermöglichen.

Quer zur Durchlaufrichtung erstrecken sich die Stempel und deren Kontaktflächen vorzugsweise über die gesamte Breite des horizontalen Durchlauf-Schlitzes für die Scheiben, vorzugsweise über die gesamte Breite der Auflagefläche, um den konstruktiven Aufwand für die Gestaltung der Vorrichtung Grenzen zu halten, denn natürlich wäre ein Flachklopfen auch in Querrichtung zur Durchlaufrichtung über mehrere separate Bereiche der Scheibe, wie es beim Plätten von Schnitzeln von Hand erfolgt, noch besser.

Die Höhe der Auflagefläche, insbesondere des gesamten Scheibenförderers, relativ zum Grundgestell und damit auch relativ zu den Stempeln, kann eingestellt werden, um die zu erzielende Dicke der Scheibe festzulegen.

Die quer zur Durchlaufrichtung sich erstreckenden leistenförmigen Stempel werden oszillierend auf und ab bewegt, indem auf jeder ihrer Oberseiten ein oder bevorzugt in Querrichtung zwei zueinander beabstandete, sich im Betrieb drehende Nocken angreifen, wobei für die in Durchlaufrichtung hintereinander liegenden Stempel auf einer Nockenwelle entsprechend viele Nocken, also für jeden Stempel einer, angeordnet sind.

Vorzugsweise sind somit in Querrichtung beabstandet zwei sich synchron drehende und identisch ausgebildete Nockenwellen vorhanden, um ein Verklemmen der leistenförmigen Stempel um die Durchlaufrichtung zu vermeiden.

Die am weitesten radial vorstehenden Enden der auf einer Nockenwelle beabstandeten vorhandenen Nocken sind vorzugsweise um 5° bis 25°, besser 10° bis 20°, besser 12° bis 17° zueinander versetzt.

Vorzugsweise weist die Nockenwelle über ein Segment von mindestens 130°, besser 180°, besser 240° keine Nocken auf, um in der dieser Lücke entsprechenden Zeit die Scheibe vorwärts transportieren zu können, was vorzugsweise über eine mechanische Kopplung des Stempelantriebes mit dem Antrieb der Auflagefläche erfolgt.

Vorzugsweise sind die Nocken exzentrisch zur Rotationsachse der sie tragenden Nockenwelle ausgebildete Kreisscheiben.

Für jeden Stempel kann einzeln der definierte Restabstand zu einer vorgegebenen Bezugshöhe am Grundgestell eingestellt werden, bei dem Antrieb durch Nocken insbesondere durch den größten Radius des Nockens zu seiner Rotationsachse, also insbesondere der Rotationsachse der Nockenwelle, die sich oberhalb der Stempel dreht.

Somit ist der Hub jedes Stempels durch die Gestaltung der an dem angreifenden Nocken, insbesondere deren Differenz zwischen größtem und kleinstem Radius, festgelegt, der absolute, maximale sowie minimale, Abstand jedes Stempels zur Auflagefläche für die Scheibe jedoch durch die einstellbare Höhe der Auflagefläche festgelegt.

Der Restabstand eines Stempels zu einer Bezugshöhe am Grundgestell ist vorzugsweise mindestens für die in Durchlaufrichtung beiden letzten Stempel nicht mehr abnehmend, sondern gleich oder sogar zunehmend, wobei die Zunahme maximal 20 %, besser maximal 10 %, besser maximal 5 % des Endabstandes beträgt. Dadurch soll die Struktur der Scheibe lediglich durch den ersten der beiden letzten Stempel, der den Endabstand erreichen kann, erzielt und durch den nächsten Stempel nur noch manifestiert werden ohne ein weiteres Dünnerklopfen zu bewirken.

Die freie Durchlasshöhe bei jeweils in der obersten Position befindlichem Stempel beträgt zumindest bei dem in Durchlaufrichtung ersten Stempel, vorzugsweise bei allen Stempeln, mindestens 15 mm, besser mindestens 18 mm, besser mindestens 20 mm, und/oder besser höchstens 25 mm, besser höchstens 22 mm.

Durch diese Abmessungen wird die Ausgangs-Dicke von Scheiben, die mit der Vorrichtung bearbeitet werden können, begrenzt.

Um das Dünnerklopfen von einem Stempel zum nächsten benachbarten Stempel schonend durchzuführen, beträgt die Höhendifferenz des Restabstandes von einem zum in Durchlaufrichtung nächsten Stempel maximal 2,5 mm, besser maximal 2 mm, besser maximal 1,5 mm, besser maximal 0,5 m.

In relativen Werten angegeben, beträgt die Höhendifferenz des Restabstandes von einem zum in Durchlaufrichtung nächsten Stempel maximal 50 %, besser maximal 40 %, besser maximal 30 %, besser maximal 25 % besser maximal 20 % des Endabstandes.

Die Bezugshöhe am Grundgestell, gegenüber der der Restabstand und/oder der Endabstand gemessen werden, ist insbesondere eine der möglichen Höhenlagen der Auflagefläche, vorzugsweise die tiefstmögliche Lage der Auflagefläche.

Um vor allem die Zeit für den Durchlauf einer Scheibe durch die Vorrichtung zu begrenzen, beträgt die Anzahl der Stempel in Durchlaufrichtung höchstens 12, besser höchstens 10, besser höchstens 8, und/oder die Mindestanzahl der Stempel zumindest 4, besser zumindest 5, besser zumindest 6.

### c) Ausführungsbeispiele

Ausführungsformen gemäß der Erfindung sind im Folgenden beispielhaft näher beschrieben. Es zeigen:

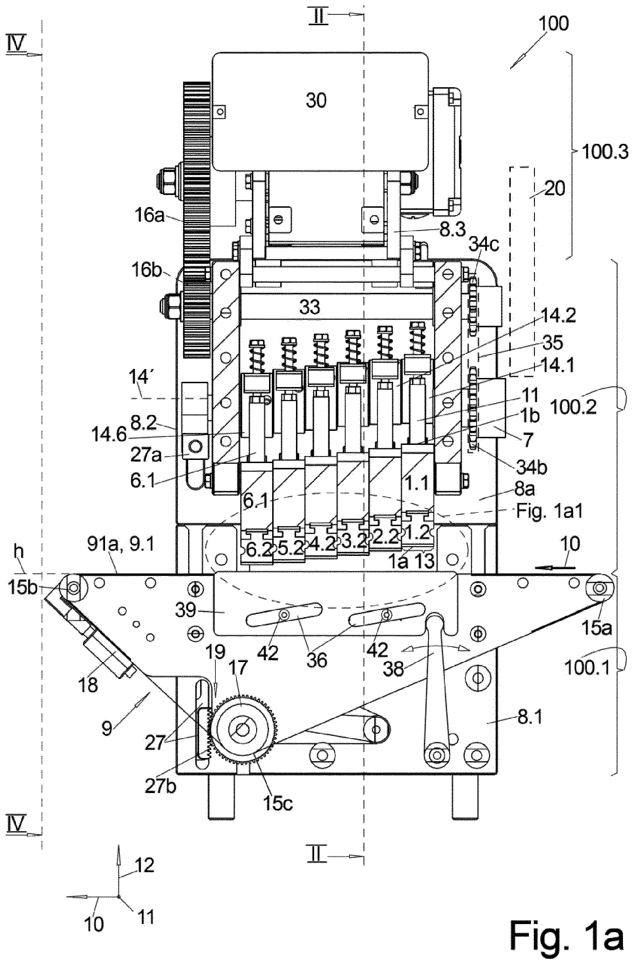

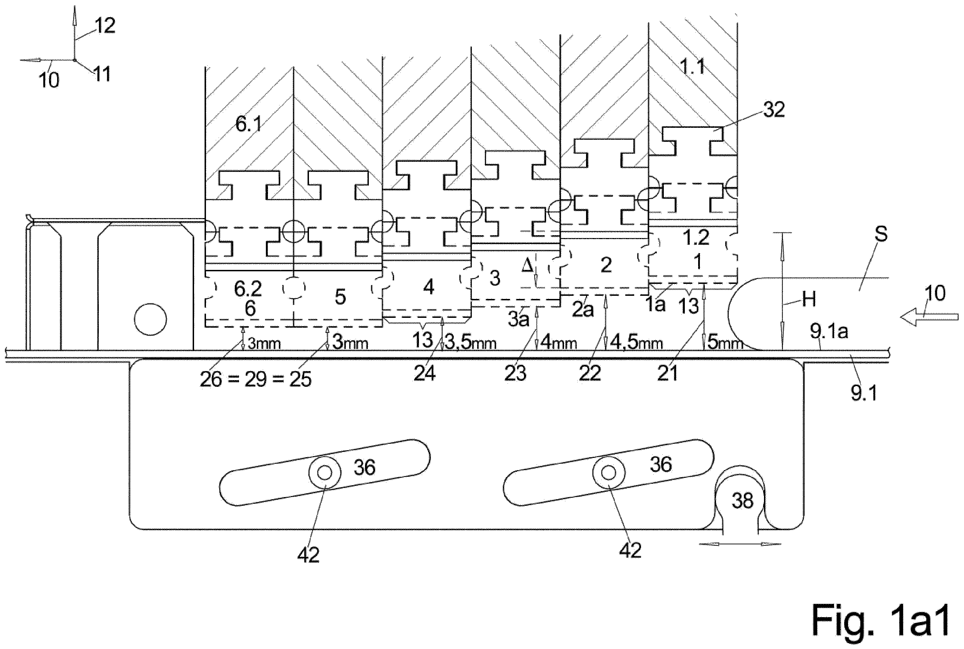

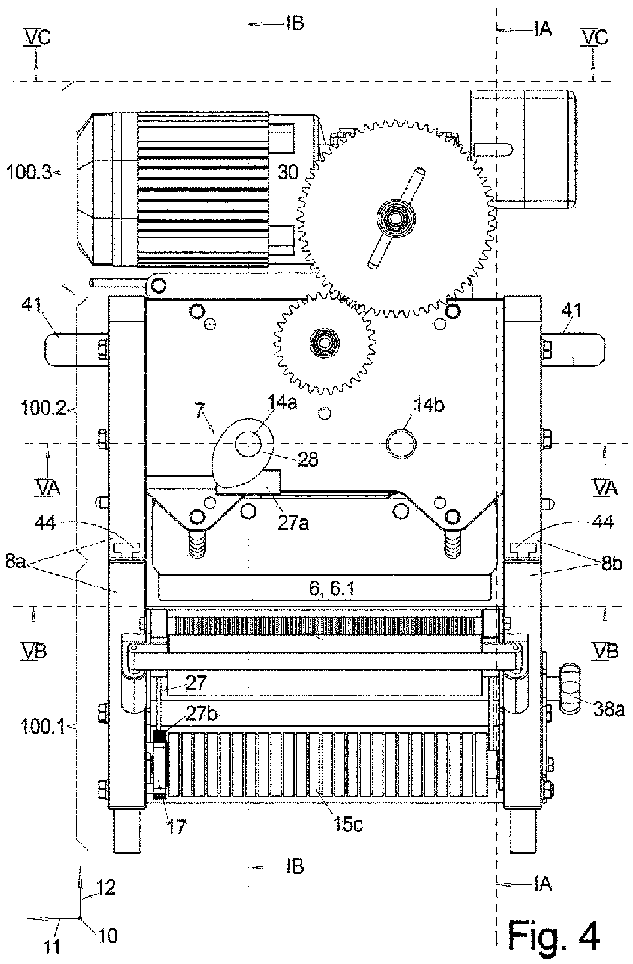

- **Figur 1a:**: den Plätter in der Seitenansicht, vertikal geschnitten entlang der Linie IA - IA der **Figur 4a,**
- **Figur 1a1:**: eine Vergrößerung aus **Figur 1a** mit dem unteren Bereich der Stempel, die alle in der unteren Endlage stehen,
- **Figur 1b:**: eine Seitenansicht mit einem Vertikalschnitt entlang der Linie IB-IB in **Figur 4a,**
- **Figur 2:**: eine Prinzipdarstellung des Stempelantriebes in Blickrichtung II - II der Figur 1a,
- **Figur 3a:**: eine Vergrößerung aus **Figur 1a** mit dem unteren Bereich der Stempel, während eines Klopfdurchganges,
- **Figur 3b:**: den Phasenversatz der Stempel im Betrieb,
- **Figur 4:**: eine rückseitige Ansicht des Plätters in Blickrichtung IVA - IVA der **Figur 1a****,** also entgegen der Durchlaufrichtung,
- **Figur 5a:**: einen Horizontalschnitt durch den Plätter entlang der Linie VA - VA in **Figur 4a** mit Blickrichtung von unten nach oben,
- **Figur 5b:**: einen Horizontalschnitt durch den Plätter entlang der Linie VB - VB **der Figur 4a** mit Blickrichtung von unten auf die Schlagflächen der Stempel,
- **Figur 5c:**: eine Aufsicht auf den Plätter von oben, entsprechen VC - VC in **Figur 4a.**

Wie am besten die **Figuren 1a** **und** **4** erkennen lassen, besteht der Plätter 100 aus mehreren übereinander angeordneten und miteinander, vorzugsweise lösbar, verbundenen Teilen, nämlich von unten nach oben einem Förderteil 100.1, einem Stempelteil 100.2 sowie einem Motorteil 100.3.

Sofern die Teile, vor allem die unteren beiden Teile, voneinander lösbar sind, vor allem für Reinigungszwecke, besitzen diese auch getrennte Grundgestelle, nämlich ein Förder-Grundgestell 8.1 und ein Stempel-Grundgestell 8.2, welche insbesondere jeweils einander gegenüberliegende und miteinander verbundene vertikale Seitenwände 8a, 8b umfassen.

Hierfür kann das Stempel-Teil 100.2, dessen Seitenwände 8.2a, b den gleichen Abstand zueinander einnehmen wie die Seitenwände 8.1a, b des Förder-Teiles 100.1, zum Verbinden mit dem Förder-Teil 100.1 in oder entgegen der Durchlaufrichtung 10 auf den Oberseiten der Seitenwände 8.1a, b des Förder-Teiles 100.1 befestigt werden, z.B. indem sie in Durchlaufrichtung 10 entlang deren Oberseiten verschoben werden und dabei die übereinander liegenden Seitenwände mittels einer dazwischen angeordneten, hinterschnittenen Seitenwand-Führung 44 formschlüssig ineinandergreifen und in einer vorgesehenen Relativlage gegeneinander Verrasten.

Der Motor-Teil 100.3 kann auch fehlen, wenn der gesamte Plätter 100 stattdessen manuell angetrieben wird und zu diesem Zweck auf einer der Wellen des Stempel-Teiles 100.2 das in **Figur 1a** gestrichelt angedeutete Handrad 20 sitzt.

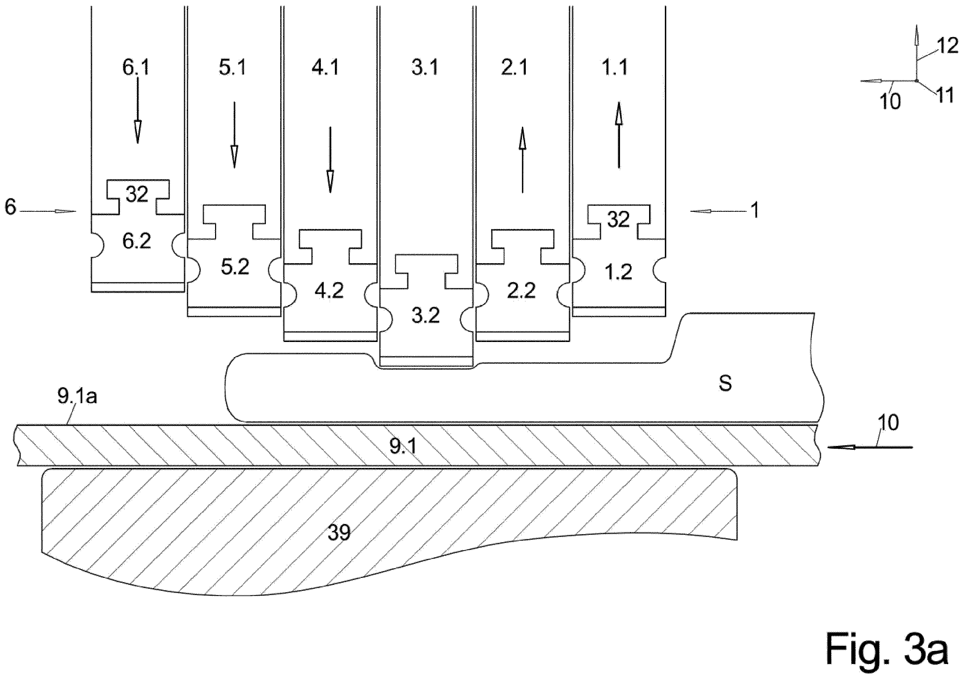

Der Förder-Teil 100.1 dient dazu, die dünner zu klopfende, nur in der Vergrößerungsdarstellung der **Figur 1a1** sowie der **Figur 3a** dargestellte Scheibe S schrittweise durch den Plätter 100 zu fördern, sodass bei jedem Stillstand der Scheibe S auf deren Oberseite die Stempel 1 bis 6 mit ihren nach unten gerichteten Kontaktflächen 1a bis 6a, den Schlagflächen, mit Kraft aufschlagen können und diese im entsprechenden Bereich flachdrücken.

Der Förder-Teil 100.1 umfasst hierfür einen in der Seitenansicht der **Figur 1a** gut erkennbaren Scheibenförderer 9, dessen Förderband 9.1 über mehrere Umlenkwalzen 15a, b, c umläuft, von denen die oberen beiden Umlenkwalzen 15a, b das Obertrum des Förderbandes 9.1 etwa horizontal spannen, sodass auf der Oberseite 9.1a des Obertrums als Auflagefläche die Fleischscheibe S aufgelegt werden kann.

Das Obertrum des Förderbandes 9.1 wird von unten abgestützt durch ein blockförmiges oder plattenförmiges Förderband-Auflager 39, welches am Grundgestell 8.1 befestigt ist und sich quer zur Durchlaufrichtung 10 über die gesamte Breite der Stempel und in Durchlaufrichtung 10 mindestens über den Längenbereich der Summe aller Stempel 1 - 6 erstreckt.

Auf der unteren Umlenkwalze 15c sitzt am einen axialen Ende ein Antriebsritzel 17, welches Teil des Förder-Antriebes 19 ist, und angetrieben wird wie später erläutert.

Am Ende der Auflagefläche 9.1a in Durchlaufrichtung 10, also an der dortigen Umlenkwalze 15b, ist etwas unterhalb der Höhe der Auflagefläche am Umfang des dort umgelenkten Förderbandes 9.1 ein Abstreifer 18 enganliegend angeordnet, um an der Auflagefläche 9.1a haftende Fleischreste abzustreifen.

Für eine gründliche Reinigung muss das Förderband 9.1 jedoch aus dem Antriebsteil 100.1 entnommen werden, wofür das Stempelteil 100.2 - gegebenenfalls nach lösen einer nicht dargestellten Verriegelung - mithilfe der Handgriffe 41 nach oben vom Förder-Teil 100.1 abgenommen wird, und daraufhin der gesamte Scheibenförderer 9 samt seinen Umlenkwalzen 15a, b, c nach oben aus dem Förder-Grundgestell 8.1 entnommen werden kann.

Dann lässt sich das Förderband 9.1 problemlos von den Umlenkwalzen 15 a, b, c und in Teile separat reinigen, insbesondere in einer Spülmaschine.

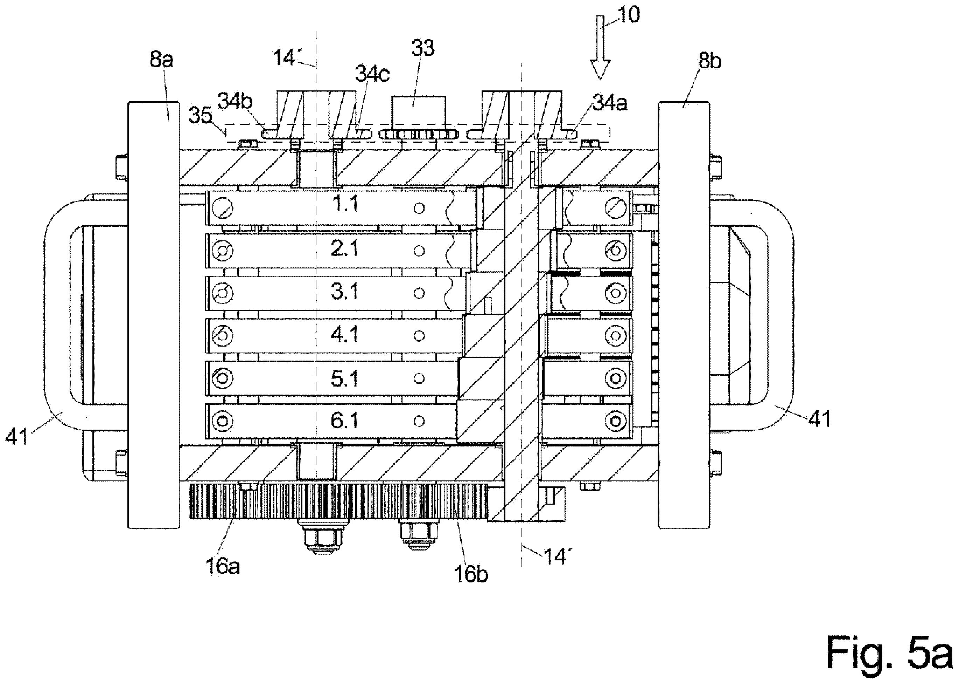

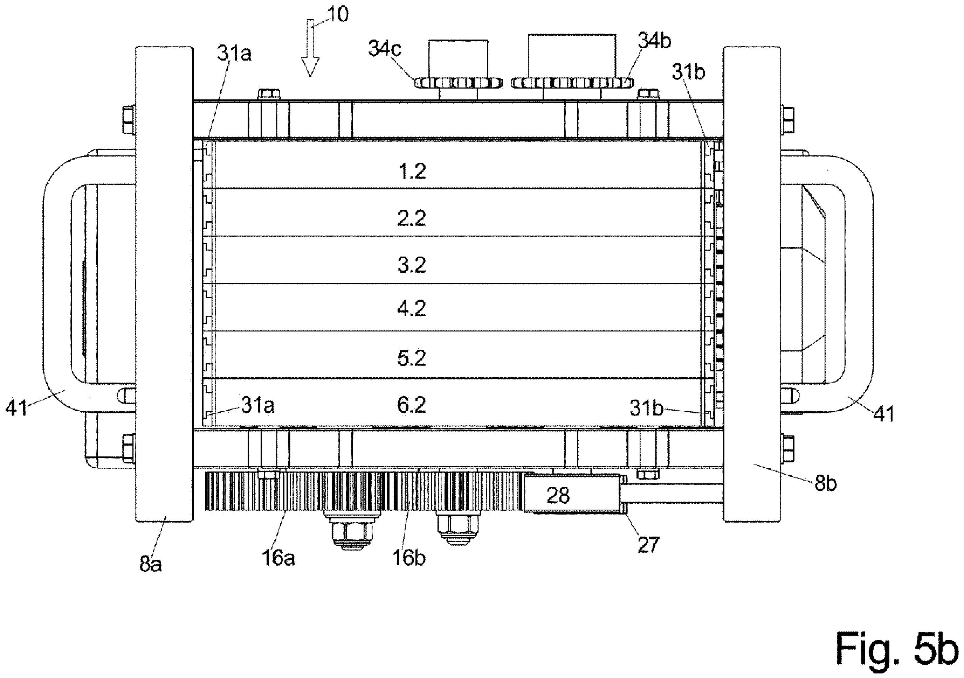

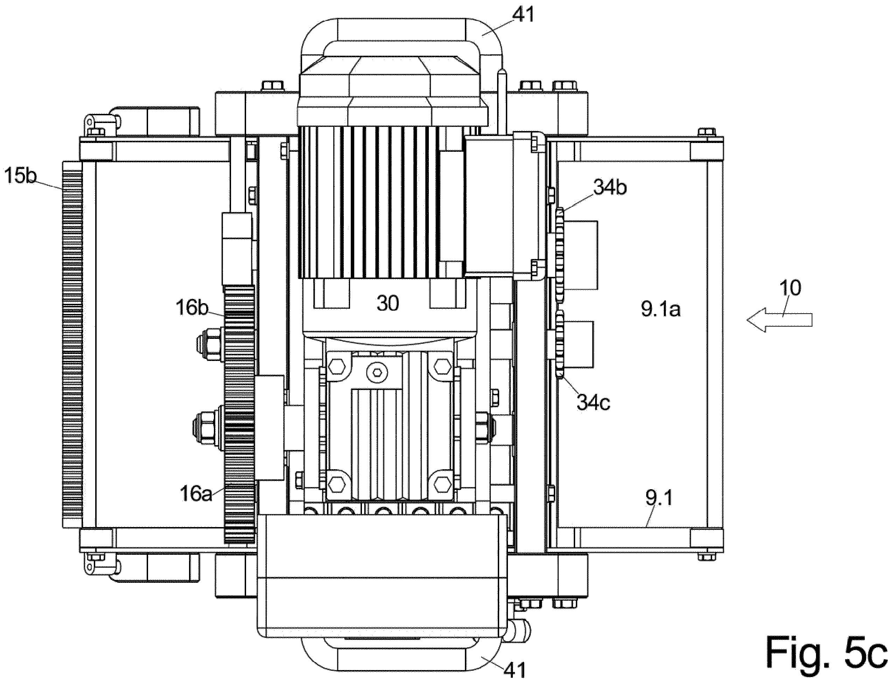

Im Stempel-Teil 100.2 sind in Durchlaufrichtung 10 hintereinander mehrere, in diesem Fall sechs, Stempel 1 - 6 auf und ab beweglich im Stempel-Grundgestell 8.2 des Stempel-Teils 100.2 geführt, indem ihre Stirnseiten jeweils in einer Stempel-Führung 31a, b - siehe **Figur 5b** - in den Seitenwänden 8a, b geführt sind.

Diese Stempel 1 - 6 sollen im Betrieb auf die stillstehende Scheibe S zeitlich versetzt nacheinander aufschlagen.

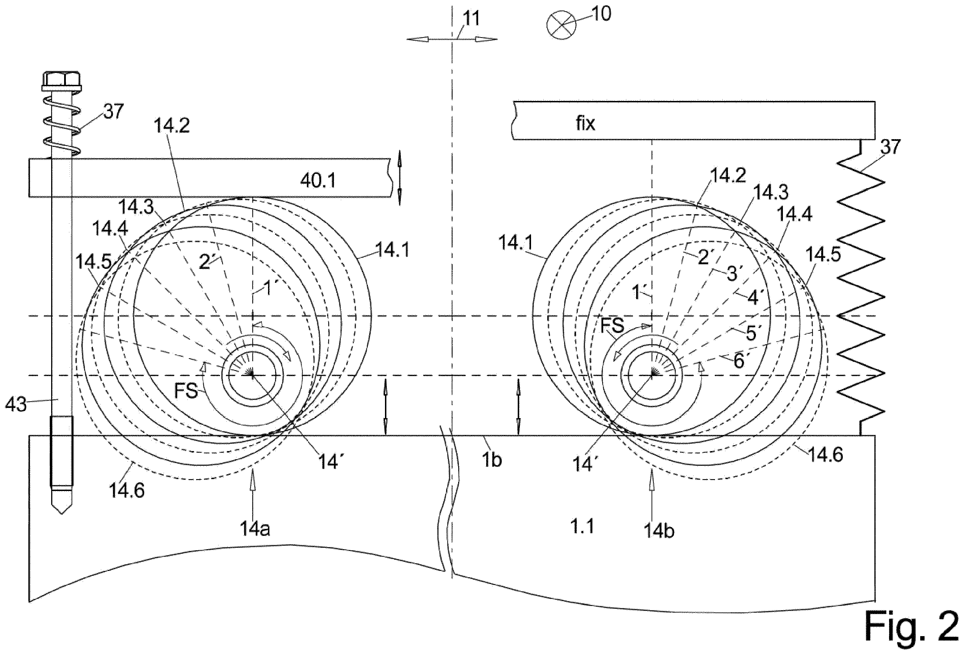

Zu diesem Zweck wird - siehe **Figur 2** - jeder Stempel, genauer dessen Antriebsteil z.B. 1.1, von einem Paar von zwei in Querrichtung 11 beabstandeten Nocken z.B. 14.1 aufwärts und abwärts angetrieben, die um jeweils eine im Durchlaufrichtung 10 verlaufende und in der Aufsicht betrachtet im rechten Winkel zur Haupterstreckungsrichtung 11 der leistenförmigen oder plattenförmigen Stempel 1 - 6 verlaufende Nocken-Achsen 14' rotierbar sind.

Die Nocken z.B. 14.1 eines Paares sind dabei vorzugsweise identisch gestaltet und werden synchron oder gegen synchron angetrieben und sind auf ihren Nocken-Achsen 14' bezüglich der Drehlage entweder identisch oder spiegelverkehrt bezüglich der Längsmittelebene zwischen den Nocken-Achsen 14' angeordnet.

Die in **Figur 2** ersichtlichen Paare von Nocken z.B. 14.1 bis 14.6, von denen jeweils ein Paar einem Stempel zugeordnet ist, sind jeweils um einen Versatzwinkel α zueinander versetzt.

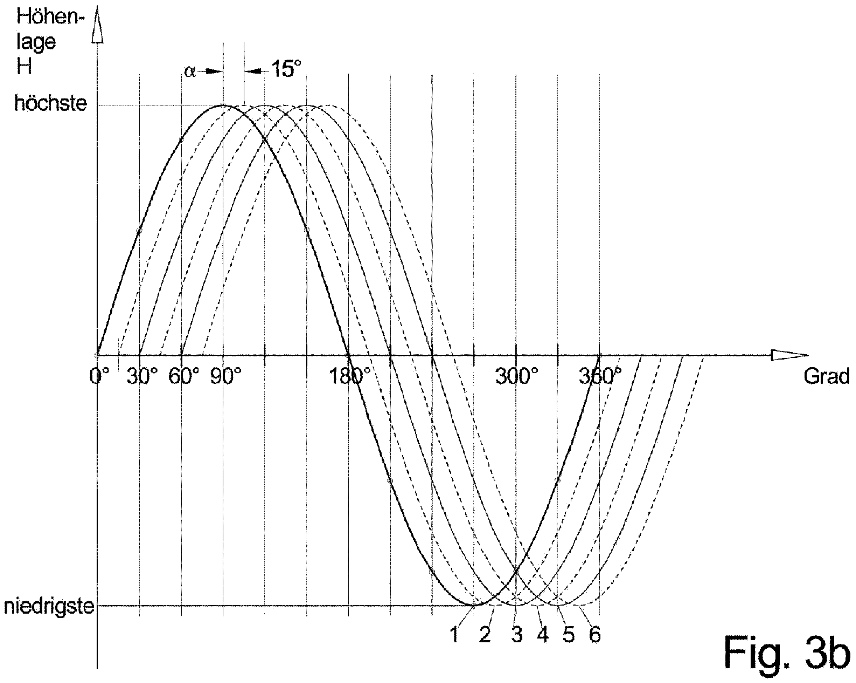

Die in Durchlaufrichtung 10 hintereinander angeordneten Nocken z.B. 14.1 bis 14.6 einer Reihe von Nocken sind jeweils auf einer Nockenwelle 14a, 14b als Nockenachse 14' drehfest angeordnet, so dass durch synchrones oder gegen synchrones - je nach identischer oder spiegelbildlicher Anordnung der Nocken der Paare - antreiben der Nockenwellen alle Stempel eine Auf- und Ab-Bewegung vollziehen, allerdings entsprechend dem Versatzwinkel α zeitlich versetzt, wie am besten in **Figur 3b** zu erkennen:
Wenn die Nocken 14.1 bis 14.6 Kreisscheiben sind, die exzentrisch auf der jeweiligen Nockenwelle 14a, b befestigt sind, läuft die Auf- und Ab-Bewegung jedes Nockens in Form einer Sinuskurve ab.

Die einzelnen Stempel 1 - 6 sind somit jeweils zwischen einer unteren Endlage und einer oberen Endlage verstellbar, wobei der Verstellhub vorzugsweise bei allen Stempeln gleich ist.

In ihrer unteren Endlage besitzen die Stempel 1 - 6 einen jeweils unterschiedlichen Restabstand 21 bis 26 - wovon der geringste Restabstand der Endabstand 29 ist - bezogen auf eine Höhenlage h des Grundgestells 8, die in **Figur 1a** mit der Höhe der Auflagefläche 9.1a in der dort dargestellten Höheneinstellung des Scheibenförderers 9 zusammenfällt, was jedoch nicht immer der Fall ist, da dessen Höhenlage einstellbar ist abhängig von der gewünschten Dicke des fertig geplätteten Schnitzels.

In diesem Fall sind die Restabstände 25, 26 der beiden in Durchlaufrichtung letzten Stempel 5, 6 gleich groß.

Die Höhenlage der Auflagefläche 9. 1a wird vorzugsweise eingestellt durch Einstellen der Höhenlage des Förderband-Auflagers 39 relativ zum Förderer-Grundgestell 8.1.

Dies ist auf einfache Art und Weise - siehe **Figur 1a** **und** **Figur 1a1** - dadurch möglich, dass in dem Förderband-Auflager 39 in Durchlaufrichtung 10 beabstandet hintereinander zwei Langlöcher 36 mit identischem, schrägem Verlauf zur Erstreckungsrichtung des Obertrums des Förderbandes 9.1 in Durchlaufrichtung 10 angeordnet sind, und in welche jeweils ein Zapfen 42 möglichst spielfrei, also passgenau, hineinragt, der am Grundgestell 8 befestigt ist und in dem Langloch 36 als Kulisse geführt wird.

Durch Verschieben des Förderband-Auflagers 39 in Durchlaufrichtung 10 kann somit dessen Höhenlage verstellt werden.

Das Verschieben ist auf einfache Art und Weise mittels eines nicht dargestellten Handgriffs möglich, der drehfest mit einem Schwenkhebel 38 gekoppelt ist, der um eine Schwenkachse unterhalb des Förderband-Auflagers 39 schwenkbar am Grundgestell 8.1 befestigt ist und mit seinem - vorzugsweise als sich mindestens über 180° erstreckenden Kreiskontur gestalteten - freien Ende in eine entsprechende Ausnehmung in der Unterseite des Auflagers 39 möglichst passgenau eingreift, so dass durch Verschwenken des Schwenkhebels 38 das Auflager 39 in oder entgegen der Durchlaufrichtung 10 und damit auch in der Höhenlage zum Grundgestell 8.1 verstellt wird. In der gewünschten Einstellung kann der Schwenkhebel 38 fixiert werden.

Wie in der Detaildarstellung der **Figur 1a1** ersichtlich, ist die Höhendifferenz zwischen den einzelnen Stempeln 1 - 5, wenn sich diese alle in der gestrichelt dargestellten unteren Endlage befinden, jeweils gleich groß und beträgt beispielsweise 0,5 mm. Die untere Endlage des letzten Stempels 6 ist vorzugsweise jedoch die gleiche wie die des vorletzten Stempels 5.

Vorzugsweise besteht zwischen benachbarten Stempeln die gleiche Höhendifferenz Δ, auch wenn sich diese gleichzeitig in der jeweils oberen oder unteren Endlage befinden würden, wie in **Figur 1a1** dargestellt, was aber im Betrieb nie Auftritt wegen der phasenversetzten Kopplung der hintereinander befindlichen Stempel über die Nockenwellen 14 a, b.

Dabei ist ersichtlich, dass der freie Höhenabstand H, also die Durchlass-Höhe H, zwischen der Auflagefläche 9.1a und der nach unten gerichteten Kontaktfläche 6a des in Durchlaufrichtung 10 ersten Stempels 6 in dessen oberer Endlage größer ist als die Dicke einer in Durchlaufrichtung 10 vor den Stempeln auf der Auflagefläche 9.1a aufgelegten Scheibe S, sodass diese schrittweise in den Plätter 100 eingefahren werden kann.

Wie in **Figur 1a1** zu erkennen, wird im ersten Schritt die Scheibe S nur soweit in Durchlaufrichtung 10 und bei angehobenen, insbesondere in der oberen Endlage befindlichen, Stempel 1 - 6 unter den Stempel 1 eingefahren, dass sie noch nicht den in Durchlaufrichtung 10 gemessenen Längenbereich des zweiten Stempels 2 erreicht, sondern vorzugsweise nur bis kurz davor.

Anschließend werden die Stempel 1 - 6 zeitlich zueinander versetzt aus ihrer oberen Endlage herabgefahren bis in ihre untere Endlage und wieder zurück, wobei mit dem ersten, also in Durchlaufrichtung 10 hintersten, Stempel 1 begonnen wird und die anderen Stempel fortlaufend folgen.

Wie beim ca. vierten Schritt, also dem 4. Klopfdurchgang, in dem das vordere Ende der Scheibe S unter dem 5. Stempels 5 liegt, anhand der **Figur 3a** vorstellbar, kann sich das beim Auftreffen des Stempels 3 in dessen Längenbereich zusammengedrückte Fleisch dadurch nicht nur entgegen der Durchlaufrichtung 10, sondern auch in Durchlaufrichtung 10 ausdehnen, da die benachbarten Stempeln 4 und 5 die Scheibe noch nicht erreicht haben sowie die ersten beiden Stempel 1 und 2 bereits wieder von der Scheibe S abgehoben haben. Dies wäre bei einer umgekehrten Reihenfolge des Auftreffens beginnend mit dem letzten Stempel 6 und endend mit dem ersten Stempel 1 nicht möglich.

Auf diese Art und Weise wird die Scheibe S schrittweise durch den Plätter 100 bewegt, und nach jedem Klopfdurchgang - bei dem jeder Stempel 1 bis 6 jeweils einmal von der oberen Endlage aus abwärts und aufwärts bewegt hat auf die Scheibe S aufgeschlagen hat, sofern sich die Scheibe S bereits unter ihm befunden hat - vorzugsweise immer um dieselbe Schrittweite vorwärts bewegt.

Dadurch, dass die in Durchlaufrichtung 10 der Scheibe S letzten Stempel 5, 6 die gleiche Höhenlage in der unteren Endlage besitzen, wird erreicht, dass der bereits beim Stempel 5 erreichte geringste Restabstand beim Stempel 6 nicht mehr weiter verkleinert wird, sondern lediglich durch erneutes Aufsetzen des letzten Stempels 6 in der Scheibe S manifestiert wird.

Um ein Zurückrutschen der Scheibe S entgegen der Durchlaufrichtung 10 zu vermeiden, können die Stempel an ihrer Kontaktfläche 1a - 6a auch dreidimensional strukturiert sein, beispielsweise indem Sie quer zur Vorschubrichtung 10 gerillt sind.

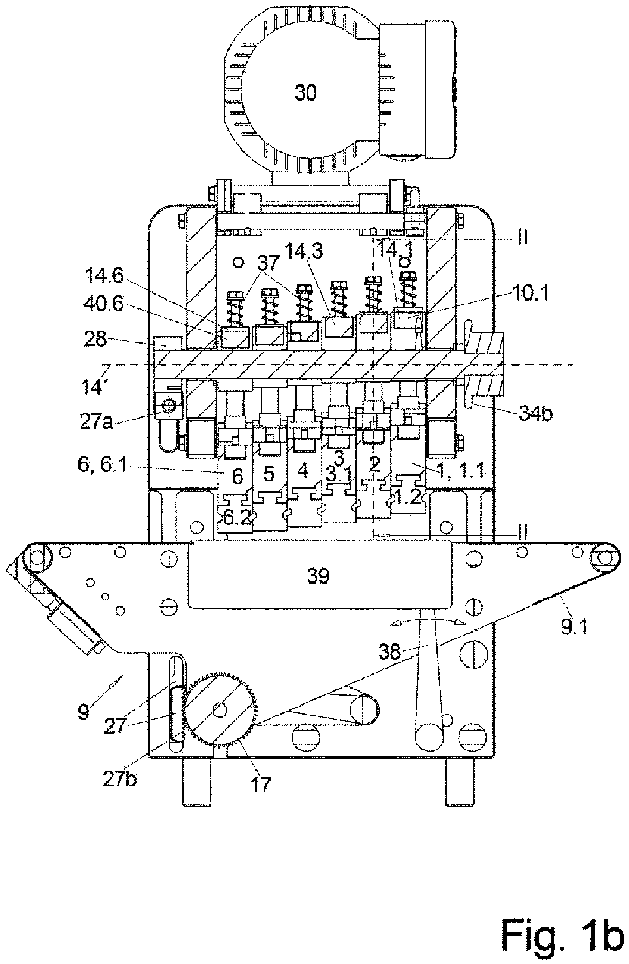

Wie am besten die **Figuren 1a** **und** **1b** erkennen lassen, sind die einzelnen Stempel 1 - 6 in ihrer vertikalen Erstreckung mehrteilig ausgebildet und bestehen aus einem oberen Antriebsteil 1.1 bis 6.1, an deren Oberseite 1b, der Antriebsfläche, der antreibende jeweilige Exzenter 14.1 bis 14.6 mit seiner Umfangsfläche anliegt, und einem an dem jeweiligen unteren Ende des Antriebsteiles 1.1 bis 6.1 befestigten Schlagteil 1.2 bis 6.2, welches mit seiner unteren Unterseite, der Kontaktfläche oder Schlagfläche 1a -6a, beim Absenken mit der Scheibe S in Kontakt gerät.

Wie die **Figuren 1a** **und** **1b** erkennen lassen, sind die beiden Teile z.B. 1.1, 1.2 formschlüssig verbunden, indem die unteren Schlagteile, die als leistenförmige Schlagleisten 1.2 bis 6.2 ausgebildet sind, in eine Schlagteil-Führung 32 mit hinterschnittener Querschnittsform in Querrichtung 11 einschiebbar sind, welche an der Unterseite des ebenfalls als leistenförmige Antriebsleiste 1.1 bis 1.6 ausgebildeten Antriebsteile angeordnet sind.

Für das leichte Wechseln der Schlagteile 1.2 bis 6.2, - die nicht nur zu Reinigungszwecken demontiert werden, sondern auch um sie gegen ein anderes Schlagteil mit einer anderen Höhe oder einer anderen Strukturierung an der Unterseite auszutauschen - sind die oberen Antriebsteile 1.1 in Relation zu den in Durchlaufrichtung 10 verlaufenden Seitenwänden 8.2a, 8.2b so dimensioniert und angeordnet, dass zumindest in der unteren Endlage aller Stempel die Schlagteil-Führung 32 unter dem unteren Ende der Seitenwände 8.2a, 8.2b liegt, und in dieser Stellung der Stempel deren Schlagteile 1.2 bis 6.2 leicht in Querrichtung 11 herausgezogen und gewechselt werden können.

Wie **Figur 2** erkennen lässt, sind die einzelnen Nocken 14.1 - 14.6 identisch ausgebildet - was jedoch nicht zwingend der Fall sein muss - und bestehen aus Kreisscheiben mit einer exzentrisch angeordneten Bohrung zum Hindurchführen der Nockenwelle 14a bzw. 14b, auf der sie dann drehfest und axialfest befestigt sind.

Vorzugsweise werden deshalb die Nocken 14.1 - 14.6 einzeln und separat hergestellt und nach Auffädeln auf der Nockenwelle 14 und bevor diese im Grundgestell 8, insbesondere im Stempel-Grundgestell 8.2, montiert wird, hinsichtlich Drehlage und axialer Lage eingestellt und auf der Nockenwelle 14a bzw. 14b montiert, und zwar bei beiden Nockenwellen 14a, b vorzugsweise in jeweils identischer Drehlage und axialer Lage bei einander entsprechenden Nocken 14.1 - 14.6, die also auf der gleichen axialen Position der beiden Nockenwellen 14a, 14b sitzen.

Dabei ist in **Figur 2** **sowie** **Figur 3b** zu erkennen, dass die sechs Nocken auf den dargestellten Nockenwellen 14a, 14b um einen Versatzwinkel α von jeweils 15° angeordnet sind, und somit über ein Winkelsegment von 360° abzüglich 75° = 285° keine radialen Nocken-Extrema, also von der Drehachse 14' zum radial am weitesten außen liegenden Punkt des Nockens verlaufenden Nocken-Strahlen 14.1' - 14.6' vorhanden sind.

Zumindest solange alle Nocken-Strahlen 14.1' - 14.6' nach oben weisen, wie etwa in **Figur 2** dargestellt, also sich alle Stempel 1 - 6 entfernt von ihrer unteren Endlage und in oder nahe ihrer oberen Endlage befinden, sollten alle Stempel 1 - 6 so weit beabstandet zur Oberseite der Scheibe S sein, dass die auf dem Scheibenförderer 9 aufliegende Scheibe S um einen Schritt vorwärts transportiert werden kann.

Ein Förder-Antrieb 19 wird erreicht, indem zusätzlich zu den Stempel-Nocken 14.1 - 14.6, die sich zwischen den Seitenwänden befinden 8a, b, außerhalb einer der Seitenwände auf einer der Nockenwellen 14a, b eine weitere Förder-Nocke 28 angeordnet ist, die den schrittweisen Antrieb des Scheibenförderers 9 bewirkt:
Zu diesem Zweck liegt die Förder-Nocke 28 an einem Schieber-Ausleger 27a an, der von einer in der Vertikalen verlaufenden, in oder an der Seitenwand 8a geführten, in der Höhe verschiebbaren Schieber 27 in Querrichtung 11 auskragt, und der in Richtung Anlage des Schieber-Auslegers 27a an der Förder-Nocke 28 vorgespannt ist. Der Schieber 27 ist teilweise in **Figur 1**a und teilweise in **Figur 1b** zu erkennen, wobei in **Figur 1a** ersichtlich ist, dass der Schieber 27 in seinem unteren Endbereich als Zahnstange 27b ausgebildet ist, die mit dem Antriebsritzel 17 auf einer der Umlenkwalzen, hier der Umlenkwalze 15c, in Eingriff steht.

Die Förder-Nocke 28 ist dabei so dimensioniert und in ihrer Drehlage auf der einen Nockenwelle 14a montiert, dass sie immer dann, wenn sich alle Nocken 1 - 6 mit ihren Symmetrielinien 1' - 6' in ihren Förder-Segmenten befinden, und den an ihnen anliegenden Stempel gerade nicht bewegen, der Schieber 27 nach unten bewegt wird und das Ritzel 17 um einen entsprechenden Winkelbetrag dreht und damit das Obertrum des Förderbandes 9.1 mit der Auflagefläche 9.1a um eine Schrittweite weiterbewegt.

Das Zurückbewegen der Zahnstange 27b nach oben bewirkt kein Zurückbewegen des Antriebs-Ritzels 17, da dieses auf der Umlenkwalze 15c mit einem Freilauf montiert ist und sich das Antriebs-Ritzel 17 in der Ansicht der **Figur 1a** nur gegen den Uhrzeigersinn bewegen kann.

Wie **Figur 1a** und **Figur 2** weiterhin zeigen, ist das jeweilige obere Antriebs-Teil 1.1 bis 6.1 jedes Stempels 1 - 6 gegenüber den jeweiligen beiden Nockenwellen 14a, b mittels Federkraft vorgespannt, um den Rückhub der Stempel nach oben zu bewirken und ein Klappern im Betrieb zu vermeiden.

Dabei sind in **Figur 2** zwei Möglichkeiten dargestellt:
Gemäß der **rechten Hälfte** der **Figur 2** ist jeder Stempel, also dessen Antriebsteil, z.B. 1.1, vorzugsweise beidseits, an seinem oberen Ende mittels einer Zugfeder 37 gegenüber einem darüber liegenden positionsfesten Bauteil, z.B. dem Stempel-Grundgestell 8.2, aufgehängt. Dadurch wird das Antriebsteil 1.1 ständig nach oben gezogen und liegt immer mit seiner Oberseite, der Antriebsfläche 1b, am Umfang des darüber befindlichen Nockens z.B. 14.1 an.

Gemäß der **linken Hälfte** der **Figur 2** - diese Lösung ist auch in den übrigen Figuren dargestellt - befindet sich oberhalb und im Abstand zur Antriebsfläche 1b ein in der Aufsicht und in Durchlaufrichtung 10 betrachtet leistenförmiges Gegenlager z.B. 40.1 über jedem Stempel z.B. 1, und die diesen Stempel antreibenden beiden Nocken z.B. 14.1 sind im Abstand zwischen der Antriebsfläche 1b und dem Gegenlager 40.1 angeordnet und liegen an beiden an, indem das Gegenlager - vorzugsweise beidseits - gegen das Antriebsteil 1.1 vorgespannt ist.

Im dargestellten Fall erfolgt dies durch eine Druckfeder 37, indem eine lange Schraube 43 durch das Gegenlager 40.1 hindurch gesteckt ist und mit dem nur in ihrem freien Endbereich vorhandenen Gewinde in die Oberseite des Antriebsteiles 1.1 eingeschraubt ist.

Dabei ist die Druckfeder 37 zwischen dem oberhalb des Gegenlagers z.B. 40.1 beabstandet positionierten Schraubenkopf und der Oberseite des Gegenlagers z.B. 40.1 als helixförmige Feder um den Schraubenschaft herum angeordnet und drückt das Gegenlager z.B. 40.1 gegen die Nocken 14.1.

Wie ferner aus der **Figur 1a** sowie im Vergleich der **Figuren 3a****, b** zu erkennen, besitzen - in Durchlaufrichtung 10 - die Antriebs-Teile 1.1 bis 6.1 eine geringere Erstreckung als die Schlag-Teile 1.2 bis 6.2, sodass letztere in Durchlaufrichtung 10 vorzugsweise nicht zueinander beabstandet sind, sondern sogar gegenseitig in Kontakt stehen, während die Antriebs-Teile einen Abstand zueinander einnehmen, wie **Figur 3a** zeigt.

Wie oben dargelegt, kann der Plätter 100 auch mittels des Handrades 20 angetrieben werden, vorzugsweise ist jedoch ein elektrischer Motor 30 als Antriebsquelle im oberen Teil, dem Motor-Teil 100.3, vorhanden, und das Handrad 20 wird nur bei ausgeschaltetem Motor 30 zum Einstellen bestimmter Betriebsstellungen des Plätters 100 benutzt, beispielsweise um das Förderband 9.1 zu demontieren oder um eines oder mehrere der Schlagteile 1.2 bis 6.2 zu wechseln.

Wie am besten **Figur 1a****,** **Figur 2** und **Figur 3b** zeigen, treibt der Motor 30 über eine Paarung von Zahnrädern 16 a, b eine obere, in Durchlaufrichtung 10 verlaufende Antriebs-Welle 33, die die Stirnwand und die Heckwand dieses Gehäuse-Teiles, des Stempel-Teiles 8.2, oberhalb der Stempel durchläuft und in diesem gelagert ist, und auf deren anderen Ende das Handrad 20 drehfest befestigt ist.

Auf diesem anderen Ende, also außerhalb der Heckwand, trägt diese Antriebs-Welle 33 weiterhin drehfest ein Ritzel 34c, ebenso wie in der gleichen Ebene hierzu die beiden Nockenwellen 14a, 14b, jeweils drehfest ein weiteres Ritzel 34a, b tragen sodass mittels einer über diese drei Ritzel 34a, b, c umlaufende Kette 35 - die nur in **Figur 1a** angedeutet ist - die Nockenwellen 14a, 14b an, und eine davon über den Förder-Nocken 28 und den Schieber 27 den gesamten Förder-Antrieb 19 und damit den Scheiben-Förderer 9.

### BEZUGSZEICHENLISTE

- 1: Stempel
- 1a: Kontaktfläche, Schlagfläche
- 1b: Oberseite, obere Stirnfläche, Antriebsfläche
- 1.1, 2.1: Antriebsteil, Antriebsleiste
- 1.2, 2.2: Schlagteil, Schlagleiste
- 2: Stempel
- 3: Stempel
- 4: Stempel
- 5: Stempel
- 6: Stempel
- 7: Stempel-Antrieb
- 8: Grundgestell
- 8a, b: Seitenwand
- 8.1: Förder-Grundgestell
- 8.2: Stempel-Grundgestell
- 8.3: Motor-Grundgestell
- 9: Scheibenförderer
- 9.1: Förderband
- 9.1a: Oberseite, Auflagefläche
- 10: Durchlaufrichtung
- 11: horizontale Querrichtung
- 12: Vertikale
- 13: Stempel-Länge
- 14a, b: Nockenwelle
- 14.1, 14.6: Stempel-Nocke
- 15a, b, c: Umlenkwalze
- 16a, b: Zahnrad
- 17: Antriebsritzel
- 18: Abstreifer
- 19: Förder-Antrieb
- 20: Handrad
- 21-26: Restabstand
- 27: Schieber
- 27a: Schieber-Ausleger
- 27b: Zahnstange
- 28: Förder-Nocke
- 29: Endabstand
- 30: Motor
- 31a, b: Stempel-Führung
- 32: Schlagteil-Führung
- 33: Antriebswelle
- 34a - c: Ritzel
- 35: Kette
- 36: Kulisse, Langloch
- 37: Feder
- 38: Schwenkhebel
- 39: Förderband-Auflager
- 40.1 - .6: Gegenlager
- 41: Handgriff
- 42: Zapfen
- 43: Schraube
- 44: Seitenwand-Führung
- 100: Plätter
- 100.1: Förder-Teil
- 100.2: Stempel-Teil
- 100.3: Motor-Teil
- α: Versatzwinkel
- Δ: Höhendifferenz
- h: Höhenlage
- H: Durchlass-Höhe
- S: Scheibe

## Patentansprüche

1. Schnitzel-**Plätter** (100) zum automatischen, gesteuerten Dünnerklopfen von Scheiben aus wenigstens teilweise plastischem Material, insbesondere rohen Schnitzeln, mit
- einem Grundgestell (8),
- einem Scheibenförderer (9) mit einer Auflagefläche (9a),
- wenigstens einem oberhalb der Auflagefläche (9a) des Scheibenförderers (9) angeordneten, auf und ab beweglichen, Plätt-Element (1),
- wobei als Plätt-Elemente (1 - 6) mehrere in Durchlaufrichtung (10) hintereinander angeordnete Stempel (1 - 6) vorhanden sind und
- wenigstens ein Stempel-Antrieb (7) für die Stempel (1 - 6) vorhanden ist. **dadurch gekennzeichnet, dass**
- die Auflagefläche (9a) die Scheiben (S) in Durchlaufrichtung (10) durch den Plätter (100) transportiert,
- die Stempel (1 - 6) aufwärts und abwärts angetrieben werden und beim abwärts bewegen auf die Scheibe schlagen und die Scheibe (S) dünner klopfen.

2. Plätter nach Anspruch 1,
**dadurch gekennzeichnet, dass**
- ein Förder-Antrieb (19) vorhanden ist, der den Scheibenförderer (9) schrittweise antreibt,
- insbesondere der Förder-Antrieb (19) mit dem Stempel-Antrieb (7) wirkverbunden ist, insbesondere mechanisch wirkverbunden ist.

3. Plätter nach einem der vorhergehenden Ansprüche,
**dadurch gekennzeichnet, dass**
die Länge (13) der Kontaktfläche (1a - 6a) der Stempel (1 - 6) zur Scheibe (S) in Durchlaufrichtung (10) maximal 40 mm beträgt, besser 30 mm beträgt, besser maximal 25 mm, besser maximal 20 mm.

4. Plätter nach einem der vorhergehenden Ansprüche,
**dadurch gekennzeichnet, dass**
- die Höhenlage (h) der Auflagefläche (9a) relativ zum Grundgestell (8) einstellbar ist
und/oder
- die Anzahl der Stempel in Durchlaufrichtung mindestens 4, besser mindestens 5, besser mindestens 6 beträgt, und/oder höchstens 12, besser höchstens 10, besser höchstens 8, besser höchstens 7 beträgt.

5. Plätter nach einem der vorhergehenden Ansprüche,
**dadurch gekennzeichnet, dass**
ein gemeinsamer Stempel-Antrieb (7) für alle Stempel (1 - 6) vorhanden ist,
- insbesondere in Form mindestens einer (14a), besser zweier parallel zueinander liegender, Nockenwellen (14a, b), die sich entlang, insbesondere über, den Stempeln (1 - 6) in Durchlaufrichtung (10) erstrecken und synchron oder gegensynchron drehend antreibbar sind,
- wobei in Durchlaufrichtung (10) beabstandet auf jeder Nockenwelle (14a, b) hintereinander Nocken (14.1 - 14.6) angeordnet sind,
- wobei insbesondere jede Nocke jeder Nockenwelle (14a, b) in Anlage mit der Oberseite (1b - 6b) eines Stempels (1 - 6), insbesondere nur eines Stempels (1 -6), bringbar ist.

6. Plätter nach einem der vorhergehenden Ansprüche,
**dadurch gekennzeichnet, dass**
- der Plätter (100) so ausgebildet ist, das jeder Stempel in der unteren Endlage seines Bewegungsweges einen für diesen Stempel spezifischen, definierten Restabstand (21 - 26) zu einer für alle Stempel gleichen Bezugshöhe am Grundgestell (8) einnimmt,
- der Restabstand (21 - 26) der Stempel in Durchlaufrichtung **abnimmt,**
- insbesondere der Stempelantrieb (7) so ausgebildet ist, dass im Betrieb des Plätters (100) in Durchlaufrichtung (10) der 1. Stempel (1) als erster seine tiefste Endlage erreicht und nachfolgend alle anderen Stempel, so dass der letzte Stempel (6) als letzter seine tiefste Endlage erreicht.

7. Plätter nach Anspruch 6,
**dadurch gekennzeichnet, dass**
- der Restabstand (21 - 26) der mindestens zwei letzten Stempel (5, 6) in Durchlaufrichtung (10) nicht abnimmt, insbesondere gleich ist
und/oder
- der geringste Restabstand (21 - 26) als Endabstand (30) definiert wird, der insbesondere beim in Durchlaufrichtung (10) letzten Stempel (6) vorliegt.

8. Plätter nach einem der vorhergehenden Ansprüche,
**dadurch gekennzeichnet, dass**
die freie Durchlass-Höhe (H) bei jeweils in die oberste Position zurückgefahrenen Stempeln mindestens 15 mm, besser mindestens 18 mm, besser mindestens 20 mm und/oder höchstens 30 mm, besser höchstens 25 mm, besser höchstens 22 mm beträgt.

9. Plätter nach einem der Ansprüche 6 bis 8,
**dadurch gekennzeichnet, dass**
die Höhendifferenz (Δ) des Restabstandes (21 - 26) von einem zum in Laufrichtung nächsten Stempel
- maximal 2,5 mm beträgt, besser maximal 2 mm beträgt, besser maximal 1,5 mm beträgt, besser maximal 1,0 mm, besser maximal 0,6 mm, besser maximal 0,5 mm beträgt,
und/oder
- maximal 50 %, besser maximal 40 %, besser maximal 30 %, besser maximal 25 %, besser maximal 20 % des Endabstandes (30) beträgt.

10. Plätter nach einem der vorherghenden Ansprüche 5 bis 9,
**dadurch gekennzeichnet, dass**
- in Durchlaufrichtung (10) benachbarte Nocken (14.1 - 14.6) auf der sie tragenden Nockenwelle mit einem Versatzwinkel (α) um die Wellen-Achse (14') zueinander von maximal 40°, besser maximal 30°, besser maximal 20°, besser maximal 15° angeordnet sind, und/oder
- die Nocken (14.1 - 14.6) exzentrisch zur Wellen-Achse (14') angeordnete Kreisscheiben sind.

11. Plätter nach einem der Ansprüche 5 bis 10,
**dadurch gekennzeichnet, dass**
- die Stempel jeweils mehrteilig ausgebildet sind, mit einem Antriebsteil (z.B. 1.1), welches die Antriebsfläche (1b) umfasst und über diese mit den Nockenwellen (14 a, b) in Kontakt steht und einem Schlagteil (z.B. 1.2), welches die Schlagfläche umfasst und über diese mit der Scheibe in Kontakt tritt,
- dass Schlagteil (z.B. 1.2) am Antriebsteil (z.B. 1.1) montierbar und demontierbar ist, ohne den Stempel aus dem Plätter (100) zu entnehmen,
- insbesondere indem jedes Schlagteil in Querrichtung zur Durchlaufrichtung in eine Führung am Antriebsteil (z.B. 1.1) einschiebbar ist.

12. Plätter nach Anspruch 11,
**dadurch gekennzeichnet, dass**
- Schlagteil (z.B. 1.2) und/oder Antriebsteil (z.B. 1.1) leistenförmig als Schlagleiste und/oder Antriebsleiste (z.B. 1.1) ausgebildet sind
- die Schlagteile (z.B. 1.2), insbesondere Schlagleisten (z.B. 1.2), unterschiedliche Höhen besitzen können, insbesondere bei gleicher Höhe der Antriebsteile (z.B. 1.1), insbesondere Antriebsleisten (z.B. 1.1).

13. Plätter nach einem der vorhergehenden Ansprüche,
**dadurch gekennzeichnet, dass**
- die Stempel in Durchlaufrichtung (10) unmittelbar hintereinander, insbesondere einander berührend, angeordnet sind,
und/oder
- der Förderantrieb (19) und der Stempelantrieb (7) mechanisch wirkverbunden sind und insbesondere von einem gemeinsamen Motor (30) aus angetrieben werden.

14. Plätter nach einem der Ansprüche 2 bis 13,
**dadurch gekennzeichnet, dass**
- der Förderantrieb (19) eine Fördernocke (28) umfasst, die auf einer der beiden Nockenwellen (14a), insbesondere auf der Außenseite einer der beiden Seitenwände (8a) des Grundgestells angeordnet ist,
- die von dem Motor (30) angetriebene Antriebswalze (15c) des Scheibenförderers (9) einen Freilauf aufweist,
- die Fördernocke (28) mit der Antriebswalze (15c), insbesondere deren Freilauf, so mechanisch wirkverbunden ist, dass sich die Antriebswalze (15c) nur dreht, wenn sich die Drehlage der Fördernocke in einem Förder-Winkelsegment befindet.

15. Plätter nach Anspruch 14,
**dadurch gekennzeichnet, dass**
- die Wirkverbindung zwischen Fördernocke (28) und Antriebswalze (15c) eine von der Fördernocke (28) linear angetriebene Zahnstange (27b) sowie ein auf der Antriebswalze (15c) angeordnetes, mit der Zahnstange (27b) kämmendes Antriebs Ritzel (17) umfasst.

16. **Verfahren** zum automatischen Dünnerklopfen einer Scheibe (S) aus wenigstens teilweise plastischem Material, insbesondere rohen Schnitzeln, mit einem Plätter (100) nach einem der vorhergehenden Ansprüche,
**dadurch gekennzeichnet, dass**
mehrere in einer Durchlaufrichtung (10) zueinander benachbarte Bereiche der Scheibe (S) jeweils mehrfach nacheinander dünner geklopft werden mittels Stempeln (1 - 6).

17. Verfahren nach Anspruch 16,
**dadurch gekennzeichnet, dass**
die Stempel (1 - 6) einen in Durchlaufrichtung (10) abnehmenden, jeweils definierten, Restabstand zwischen der Auflagefläche für die Scheibe (S) und der Schlagfläche (z.B. 1a) des Stempels (z.B. 1) aufweisen.

18. Verfahren nach Anspruch 17,
**dadurch gekennzeichnet, dass**
jeder der Bereiche mehrfach mit einem Endabstand (29), der dem kleinsten Restabstand (21 - 26) entspricht, zwischen der Auflagefläche (9. 1a) für die Scheibe (S) und der Schlagfläche (z.B. 1a) des Stempels (z.B. 1) geklopft werden.

19. Verfahren nach einem der vorhergehenden Verfahrensansprüche,
**dadurch gekennzeichnet, dass**
die Stempel in Durchlaufrichtung (10) hintereinander ortsfest angeordnet sind und zeitlich zueinander versetzt zum Einsatz kommen.

20. Verfahren nach einem der vorhergehenden Verfahrensansprüche,
**dadurch gekennzeichnet, dass**
- der Vorschub der Scheibe (S) schrittweise erfolgt,
- insbesondere die Schrittweite des Vorschubes geringer gewählt wird als die Erstreckung (13) eines Stempels in Durchlaufrichtung (10).

21. Verfahren nach Anspruch 20,
**dadurch gekennzeichnet, dass**
- die Schrittweite um maximal 10 %, besser maximal 5 %, besser maximal 3 % geringer gewählt wird als die Erstreckung eines Stempels (1 - 6) in Durchlaufrichtung (10).

22. Verfahren nach einem der vorhergehenden Verfahrensansprüche,
**dadurch gekennzeichnet, dass**
das Dünnerklopfen verschiedener einzelner Bereiche der Scheibe (S) zeitlich überlappend durchgeführt wird, insbesondere auch unmittelbar zueinander benachbarter Bereiche.

23. Verfahren nach einem der Ansprüche 17 bis 22,
**dadurch gekennzeichnet, dass**
- der Endbstand (29) eingestellt wird durch Verlagern der Auflagefläche für die Scheibe (S) relativ zu den Kontaktflächen (1a - 6a) der Stempel (1 - 6)
und/oder
- die Höhendifferenzen (Δ) des Restabstandes (21 - 26) von einem zum in Durchlaufrichtung (10) nächsten Stempel und/oder der Endabstand eingestellt werden durch Austauschen eines oder mehrerer Schlagteile, insbesondere Schlagleisten, an einem oder mehreren der Antriebsteile, Insbesondere Antriebsleisten, der Stempel.

24. Verfahren nach einem der vorhergehenden Verfahrensansprüche,
**dadurch gekennzeichnet, dass**
die Scheibe (S) mit der Richtung ihrer größten Erstreckung ihrer Hauptebene in Durchlaufrichtung (10) auf die Auflagefläche (9.1a) gelegt wird.

25. Verfahren nach einem der vorhergehenden Verfahrensansprüche mit einem Plätter nach zumindest Anspruch 5,
**dadurch gekennzeichnet, dass**
die vollständige auf-und ab Bewegung eines Stempels (1 - 6), insbesondere ein vollständiger Umlauf einer Nockenwelle (14a, b) kleiner gewählt wird als 1,5 s, insbesondere kleiner als 1 s.

## Claims

1. A meat cutlet **flattener** (100) made of at least partly plastic material for the automatic, controlled flattening of cutlets, in particular raw cutlets, having
- a base frame (8),
- a cutlet conveyor (9) with a bearing surface (9a),
- at least one flattener element (1) arranged above the bearing surface (9a) of the cutlet conveyor (9) and movable up and down,
- wherein multiple punches (1 - 6) arranged one behind the other in the direction of passage (10) are present as flattener elements (1 - 6), and
- at least one punch drive (7) for the punches (1 - 6) is present.
**characterised in that**
- the bearing surface (9a) conveys the cutlets (S) in the direction of passage (10) and through the flattener (100),
- the punches (1 - 6) are driven up and down, pounding the cutlet as they move in the downward direction and thereby flattening the cutlet (S).

2. The flattener according to claim 1,
**characterised in that**
- a conveyor drive (19) is present, which drives the cutlet conveyor (9) step-by-step,
- in particular the conveyor drive (19) is operatively connected, in particular mechanically operatively connected, to the punch drive (7).

3. The flattener according to any of the preceding claims,
**characterised in that**
the length (13) of the contact surface (1a - 6a) of the punches (1 - 6) relative to the cutlet (S) in the direction of passage (10) is at most 40 mm, more preferably 30 mm, more preferably at most 25 mm, more preferably at most 20 mm.

4. The flattener according to any of the preceding claims,
**characterised in that**
- the height position (h) of the bearing surface (9a) is adjustable relative to the base frame (8)
and/or
- the number of punches in the direction of passage is at least 4, more preferably at least 5, more preferably at least 6, and/or at most 12, more preferably at most 10, more preferably at most 8, more preferably at most 7.

5. The flattener according to any of the preceding claims,
**characterised in that**
a common punch drive (7) is present for all punches (1 - 6),
- in particular in the form of at least one (14a), more preferably two, cam shafts (14a, b) lying parallel to one another, which extend along, in particular across, the punches (1 - 6) in the direction of passage (10) and are drivable synchronously or counter-synchronously,
- wherein cams (14.1 - 14.6) are arranged one behind the other on each camshaft (14a, b) in the direction of passage (10) and are spaced apart from one another,
- wherein, in particular, each cam of each camshaft (14a, b) can be brought into contact with the upper side (1b - 6b) of a punch (1 - 6), in particular of only one punch (1 - 6).

6. The flattener according to any of the preceding claims,
**characterised in that**
- the flattener (100) is designed such that each punch assumes, in the lower end position of its movement path, a defined remaining distance (21 - 26), which is specific to this punch, relative to a reference height on the base frame (8), which reference height is the same for all punches,
- the remaining distance (21 - 26) of the punches **decreases** in the direction of passage,
- in particular the punch drive (7) is designed such that during operation of the flattener (100) in the direction of passage (10), the 1^{st} punch (1) reaches its lowest end position first, and subsequently all other punches reach their lowest end position, so that the last punch (6) reaches its lowest end position last.

7. The flattener according to claim 6,
**characterised in that**
- the remaining distance (21 - 26) of the at least two last punches (5, 6) does not decrease in the direction of passage (10), but is in particular the same, and/or
- the least remaining distance (21 - 26) is defined as the end distance (30), which exists in particular for the last punch (6) in the direction of passage (10).

8. The flattener according to any of the preceding claims,
**characterised in that**
the free clearance height (H) for punches retracted into the uppermost position is at least 15 mm, more preferably at least 18 mm, more preferably at least 20 mm, and/or at most 30 mm, more preferably at most 25 mm, more preferably at most 22 mm.

9. The flattener according to any of claims 6 to 8,
**characterised in that**
the height difference (Δ) of the remaining distance (21 - 26) from one punch to the next in the direction of travel
- is at most 2.5 mm, more preferably at most 2 mm, more preferably at most 1.5 mm, more preferably at most 1.0 mm, more preferably at most 0.6 mm, more preferably at most 0.5 mm,
and/or
- is at most 50%, more preferably at most 40%, more preferably at most 30%, more preferably at most 25%, more preferably at most 20% of the end distance (30).

10. The flattener according to any of the preceding claims 5 to 9,
**characterised in that**
- cams (14.1 - 14.6), which are adjacent in the direction of passage (10), are arranged on the camshaft bearing them at an offset angle (α) about the shaft axis (14') of at most 40°, more preferably at most 30°, more preferably at most 20°, more preferably at most 15°,
and/or
- the cams (14.1 - 14.6) are circular disks arranged eccentrically to the shaft axis (14').

11. The flattener according to any of claims 5 to 10,
**characterised in that**
- the punches are each formed in multiple parts, with a drive part (e.g., 1.1), which comprises the drive surface (1b) and is in contact with the camshafts (14 a, b) via the drive surface, and a pounder (e.g., 1.2), which comprises the pounding surface and makes contact with the cutlet via the pounding surface,
- the pounder (e.g., 1.2) can be mounted on and dismantled from the drive part (e. g., 1.1) without removing the punch from the flattener (100),
- in particular by virtue of each pounder being insertable into a guide on the drive part (e.g., 1.1) in the transverse direction relative to the direction of passage.

12. The flattener according to claim 11,
**characterised in that**
- the pounder (e.g., 1.2) and/or drive part (e.g., 1.1) are designed as a bar in the form of a pounding bar and/or drive bar (e.g., 1.1)
- the pounders (e.g., 1.2), in particular pounding bars (e.g., 1.2), can have different heights, in particular with the drive parts (e.g., 1.1), in particular drive bars (e.g., 1.1), having the same height.

13. The flattener according to any of the preceding claims,
**characterised in that**
- the punches are arranged directly one behind the other, in particular touching one another, in the direction of passage (10),
and/or
- the conveyor drive (19) and the punch drive (7) are mechanically operatively connected and, in particular, driven by a common motor (30).

14. The flattener according to any of claims 2 to 13,
**characterised in that**
- the conveyor drive (19) comprises a conveyor cam (28) which is arranged on one of the two camshafts (14a), in particular on the outer side of one of the two side walls (8a) of the base frame,
- the drive roller (15c) of the cutlet conveyor (9) driven by the motor (30) has a freewheel,
- the conveyor cam (28) is mechanically operatively connected to the drive roller (15c), in particular its freewheel, such that the drive roller (15c) rotates only when the rotational position of the conveyor cam is in a conveyor angle segment.

15. The flattener according to claim 14,
**characterised in that**
- the operative connection between the conveyor cam (28) and the drive roller (15c) comprises a toothed rack (27b), which is linearly driven by the conveyor cam (28), and a drive pinion (17) which is arranged on the drive roller (15c) and meshes with the toothed rack (27b).

16. A **method** made of at least partly plastic material for the automatic flattening of a cutlet (S), in particular raw cutlets, with a flattener (100) according to any of the preceding claims,
**characterised in that**
multiple regions of the cutlet (S) adjacent to one another in a direction of passage (10) are each flattened several times in succession by means of punches (1-6).

17. The method according to claim 16,
**characterised in that**
the punches (1 - 6) have a, respectively defined, remaining distance between the bearing surface for the cutlet (S) and the pounding surface (e.g., 1a) of the punch (e.g., 1), which remaining distance decreases in the direction of passage (10).

18. The method according to claim 17,
**characterised in that**
each of the regions with an end distance (29) corresponding to the smallest remaining distance (21 - 26) is pounded several times between the bearing surface (9. 1a) for the cutlet (S) and the pounding surface (e.g., 1a) of the punch (e.g., 1).

19. The method according to any of the preceding claims,
**characterised in that**
the punches are arranged in a stationary manner one behind the other in the direction of passage (10) and are used in a time-staggered manner.

20. The method according to any of the preceding claims,
**characterised in that**
- the cutlet (S) is advanced stepwise,
- in particular, the step size of the feed is selected to be smaller than the extension (13) of a punch in the direction of passage (10).

21. The method according to claim 20,
**characterised in that**
- the step size is selected to be smaller by at most 10%, more preferably at most 5%, more preferably at most 3%, than the extension of a punch (1 - 6) in the direction of passage (10).

22. The method according to any of the preceding claims,
**characterised in that**
the flattening of different individual regions of the cutlet (S), in particular also of directly adjacent regions, is carried out in a temporally overlapping manner.

23. The method according to any of claims 17 to 22,
**characterised in that**
- the end distance (29) is set by displacing the bearing surface for the cutlet (S) relative to the contact surfaces (1a - 6a) of the punches (1 - 6)
and/or
- the height differences (Δ) of the remaining distance (21 - 26) from one punch to the next in the direction of passage (10) and/or the end distance are set by replacing one or more pounders, in particular pounding bars, on one or more of the drive parts, in particular drive bars, of the punches.

24. The method according to any of the preceding claims,
**characterised in that**
the cutlet (S) is placed on the bearing surface (9.1a) with the direction of its largest extension of its main plane in the direction of passage (10).

25. The method according to any of the preceding method claims with a flattener according to at least claim 5,
**characterised in that**
the complete upward and downward movement of a punch (1 - 6), in particular a complete circulation of a camshaft (14 a, b), is selected to be less than 1.5 s, in particular less than 1 s.

## Revendications

1. Dispositif d'aplatissement d'escalopes (100) pour l'aplatissement automatique commandé de tranches de matériau au moins partiellement plastique, en particulier d'escalopes crues, avec
- un châssis de base (8),
- un convoyeur de tranches (9) avec une surface d'appui (9a),
- au moins un élément d'aplatissement (1) disposé au-dessus de la surface d'appui (9a) du convoyeur de tranches (9) et mobile vers le haut et vers le bas,
- dans lequel plusieurs poinçons (1 - 6) disposés les uns derrière les autres dans le sens de passage (10) sont présents en tant qu'éléments d'aplatissement (1 - 6) et
- dans lequel il existe au moins un entraînement de poinçon (7) pour les poinçons (1 - 6),
**caractérisé en ce que**
- la surface d'appui (9a) transporte les tranches (S) dans le sens de passage (10) à travers le dispositif d'aplatissement (100),
- les poinçons (1 - 6) sont entraînés vers le haut et vers le bas et frappent la tranche lors du déplacement vers le bas et aplatissent la tranche (S).

2. Dispositif d'aplatissement selon la revendication 1,
**caractérisé en ce que**
- il existe un entraînement de transport (19) qui entraîne pas à pas le convoyeur de tranches (9),
- en particulier l'entraînement de transport (19) est en liaison active avec l'entraînement de poinçon (7), en particulier est en liaison active mécanique.

3. Dispositif d'aplatissement selon l'une des revendications précédentes,
**caractérisé en ce que**
la longueur (13) de la surface de contact (1a - 6a) des poinçons (1 - 6) par rapport à la tranche (S) dans le sens de passage (10) est de 40 mm maximum, mieux de 30 mm, mieux de 25 mm maximum, mieux de 20 mm maximum.

4. Dispositif d'aplatissement selon l'une des revendications précédentes,
**caractérisé en ce que**
- la position en hauteur (h) de la surface d'appui (9a) est réglable par rapport au châssis de base (8)
et/ou
- le nombre de poinçons dans le sens de passage est d'au moins 4, mieux d'au moins 5, mieux d'au moins 6, et/ou d'au plus 12, mieux d'au plus 10, mieux d'au plus 8, mieux d'au plus 7.

5. Dispositif d'aplatissement l'une des revendications précédentes,
**caractérisé en ce que**
il existe un entraînement de poinçon (7) commun à tous les poinçons (1 - 6),
- en particulier sous la forme d'au moins un (14a), mieux de deux arbres à cames (14a, b) parallèles l'un à l'autre, qui s'étendent le long, en particulier au-dessus, des poinçons (1 - 6) dans le sens de passage (10) et qui peuvent être entraînés en rotation de manière synchrone ou contre-synchrone,
- dans lequel des cames (14.1 - 14.6) sont disposées à distance les unes derrière les autres dans le sens de passage (10) sur chaque arbre à cames (14a, b),
- dans lequel chaque came de chaque arbre à cames (14a, b) peut en particulier être amenée en contact avec la face supérieure (1b - 6b) d'un poinçon (1 - 6), en particulier d'un seul poinçon (1 - 6).

6. Dispositif d'aplatissement selon l'une des revendications précédentes,
**caractérisé en ce que**
- le dispositif d'aplatissement (100) est conçu de telle sorte que chaque poinçon, dans la position finale inférieure de sa course de déplacement, occupe une distance résiduelle (21 - 26) définie, spécifique à ce poinçon, par rapport à une hauteur de référence sur le châssis de base (8), identique pour tous les poinçons,
- la distance résiduelle (21 - 26) des poinçons diminue dans le sens de passage,
- en particulier l'entraînement de poinçon (7) est conçu de telle sorte que, lors du fonctionnement du dispositif d'aplatissement (100) dans le sens de passage (10), le premier poinçon (1) atteint en premier sa position finale la plus basse et ensuite tous les autres poinçons, de sorte que le dernier poinçon (6) atteint en dernier sa position finale la plus basse.

7. Dispositif d'aplatissement selon la revendication 6,
**caractérisé en ce que**
- la distance résiduelle (21 - 26) des au moins deux derniers poinçons (5, 6) ne diminue pas dans le sens de passage (10), en particulier est identique et/ou
- la distance résiduelle la plus faible (21 - 26) est définie comme distance finale (30), qui existe en particulier pour le dernier poinçon (6) dans le sens de passage (10).

8. Dispositif d'aplatissement selon l'une des revendications précédentes,
**caractérisé en ce que**
la hauteur de passage libre (H) est d'au moins 15 mm, mieux d'au moins 18 mm, mieux d'au moins 20 mm et/ou d'au plus 30 mm, mieux d'au plus 25 mm, mieux d'au plus 22 mm, lorsque les poinçons sont respectivement rétractés dans la position la plus haute.

9. Dispositif d'aplatissement selon l'une des revendications 6 à 8,
**caractérisé en ce que**
la différence de hauteur (Δ) de la distance résiduelle (21 - 26) d'un poinçon au suivant dans le sens de la marche
- est au maximum de 2,5 mm, mieux est au maximum de 2 mm, mieux est au maximum de 1,5 mm, mieux au maximum de 1,0 mm, mieux au maximum de 0,6 mm, mieux au maximum de 0,5 mm,
et/ou
- est au maximum de 50 %, mieux au maximum de 40 %, mieux au maximum de 30 %, mieux au maximum de 25 %, mieux au maximum de 20 % de la distance finale (30).

10. Dispositif d'aplatissement selon l'une des revendications précédentes 5 à 9, **caractérisé en ce que**
- des cames (14.1 - 14.6) voisines dans le sens de passage (10) sont disposées sur l'arbre à cames qui les porte avec un angle de décalage (α) autour de l'axe de l'arbre (14') les unes par rapport aux autres de 40° maximum, mieux de 30° maximum, mieux de 20° maximum, mieux de 15° maximum,
et/ou
- les cames (14.1 - 14.6) sont des disques circulaires disposés de manière excentrée par rapport à l'axe de l'arbre (14').

11. Dispositif d'aplatissement selon l'une des revendications 5 à 10,
**caractérisé en ce que**
- les poinçons sont chacun réalisés en plusieurs parties, avec une partie d'entraînement (par exemple 1.1) qui comprend la surface d'entraînement (1b) et qui est en contact avec les arbres à cames (14 a, b) par l'intermédiaire de celle-ci, et une partie de frappe (par exemple 1.2) qui comprend la surface de frappe et qui est en contact avec la tranche par l'intermédiaire de celle-ci,
- la pièce de frappe (par exemple 1.2) peut être montée et démontée sur la pièce d'entraînement (par exemple 1.1) sans retirer le poinçon du dispositif d'aplatissement, (100),
- en particulier **en ce que** chaque élément de frappe peut être inséré dans un guide sur la partie d'entraînement (par exemple 1.1) dans le sens transversal par rapport au sens de passage.

12. Dispositif d'aplatissement selon la revendication 11,
**caractérisé en ce que**
- la partie de frappe (par exemple 1.2) et/ou la partie d'entraînement (par exemple 1.1) sont réalisées en forme de barre comme barre de frappe et/ou barre d'entraînement (par exemple 1.1),
- les parties de frappe (par exemple 1.2), en particulier les barres de frappe (par exemple 1.2), peuvent avoir des hauteurs différentes, en particulier lorsque les parties d'entraînement (par exemple 1.1), en particulier les barres d'entraînement (par exemple 1.1), ont la même hauteur.

13. Dispositif d'aplatissement selon l'une des revendications précédentes,
**caractérisé en ce que**
- les poinçons sont disposés directement les uns derrière les autres dans le sens de passage (10), en particulier en se touchant,
et/ou
- l'entraînement de transport (19) et l'entraînement de poinçon (7) sont reliés mécaniquement de manière fonctionnelle et sont en particulier entraînés par un moteur commun (30).

14. Dispositif d'aplatissement selon l'une des revendications 2 à 13,
**caractérisé en ce que**
- l'entraînement de transport (19) comprend une came de transport (28) disposée sur l'un des deux arbres à cames (14a), en particulier sur la face extérieure de l'une des deux parois latérales (8a) du châssis de base,
- le rouleau d'entraînement (15c) du convoyeur de tranches (9), entraîné par le moteur (30), présente une roue libre,
- la came de transport (28) est en liaison active mécanique avec le rouleau d'entraînement (15c), en particulier sa roue libre, de telle sorte que le rouleau d'entraînement (15c) ne tourne que lorsque la position de rotation de la came de transport se trouve dans un segment angulaire de transport.

15. Dispositif d'aplatissement selon la revendication 14,
**caractérisé en ce que**
- la liaison active entre la came de transport (28) et le rouleau d'entraînement (15c) comprend une crémaillère (27b) entraînée linéairement par la came de transport (28) ainsi qu'un pignon d'entraînement (17) disposé sur le rouleau d'entraînement (15c) et engrenant avec la crémaillère (27b).

16. Procédé d'aplatissement automatique d'une tranche (S) de matériau au moins partiellement plastique, en particulier d'escalopes crues, à l'aide d'un dispositif d'aplatissement (100) selon l'une des revendications précédentes,
**caractérisé en ce que**
plusieurs parties de la tranche (S) voisines les unes des autres dans un sens de passage (10) sont respectivement aplaties plusieurs fois successivement pour être plus minces au moyen de poinçons (1 - 6).

17. Procédé selon la revendication 16,
**caractérisé en ce que**
les poinçons (1 - 6) présentent une distance résiduelle entre la surface d'appui pour la tranche (S) et la surface de frappe (par exemple 1a) du poinçon (par exemple 1) qui diminue dans le sens de passage (10) et qui est définie à chaque fois.

18. Procédé selon la revendication 17,
**caractérisé en ce que**
chacune des parties est aplatie plusieurs fois avec une distance finale (29) correspondant à la plus petite distance résiduelle (21 - 26) entre la surface d'appui (9. 1a) pour la tranche (S) et la surface de frappe (par exemple 1a) du poinçon (par exemple 1).

19. Procédé selon l'une des revendications de procédé précédentes,
**caractérisé en ce que**
les poinçons sont disposés de manière fixe les uns derrière les autres dans le sens de passage (10) et sont utilisés de manière décalée dans le temps.

20. Procédé selon l'une des revendications de procédé précédentes,
**caractérisé en ce que**
- l'avancement de la tranche (S) s'effectue par étapes,
- en particulier, l'incrément de l'avancement est choisi inférieur à l'extension (13) d'un poinçon dans le sens de passage (10).

21. Procédé selon la revendication 20,
**caractérisé en ce que**
- l'incrément est choisi inférieur d'au maximum 10 %, mieux d'au maximum 5 %, mieux d'au maximum 3 % à l'extension d'un poinçon (1 - 6) dans le sens de passage (10).

22. Procédé selon l'une des revendications de procédé précédentes,
**caractérisé en ce que**
l'aplatissement de différentes parties individuelles de la tranche (S) est effectué de manière à se chevaucher dans le temps, en particulier aussi de parties directement voisines les unes des autres.

23. Procédé selon l'une des revendications 17 à 22,
**caractérisé en ce que**
- la distance finale (29) est réglée en déplaçant la surface d'appui de la tranche (S) par rapport aux surfaces de contact (1a-6a) des poinçons (1-6)
et/ou
- les différences de hauteur (Δ) de la distance résiduelle (21 - 26) d'un poinçon au poinçon suivant dans le sens de passage (10) et/ou la distance finale sont réglées en remplaçant une ou plusieurs pièces de frappe, en particulier des barres de frappe, sur une ou plusieurs des pièces d'entraînement, en particulier des barres d'entraînement, des poinçons.

24. Procédé selon l'une des revendications de procédé précédentes,
**caractérisé en ce que**
la tranche (S) est posée sur la surface d'appui (9.1a) avec la direction de sa plus grande extension de son plan principal dans le sens de passage (10).

25. Procédé selon l'une des revendications de procédé précédentes avec un dispositif d'aplatissement au moins selon la revendication 5,
**caractérisé en ce que**
le mouvement complet de haut en bas d'un poinçon (1-6), en particulier une rotation complète d'un arbre à cames (14a, b) est choisi inférieur à 1,5 s, en particulier inférieur à 1 s.
